# EUROPÄISCHE PATENTSCHRIFT

(11) **EP 1 186 483 B1**
(45) Veröffentlichungstag und Bekanntmachung des Hinweises auf die Patenterteilung: **15.08.2007**
(21) Anmeldenummer: 01121499.6
(22) Anmeldetag: 08.09.2001
(51) Int. Cl.: B60R 21/13

(54) **Fahrzeugfestes Überrollschutzsystem-Gehäuse mit aus- und einfahrbargeführtem Überrollkörper**
Cartridge for a rollover protection system guiding an expandable and retractable rollbar
Cartouche pour arceau de sécurité guidant un arceau déployable et rétractable

(30) Priorität: 12.09.2000 DE 10044926
(43) Veröffentlichungstag der Anmeldung: 13.03.2002
(73) Patentinhaber: ISE Innomotive Systems Europe GmbH, 51702 Bergneustadt (DE)
(72) Erfinder: Latussek, Holger, 51702 Bergneustadt (DE); Lang, Jozsef, 1131 Budapest (HU); Nowack, Reinhard, 57489 Drolshagen (DE)
(74) Vertreter: Fuchs

(56) Entgegenhaltungen:
- EP-A- 0 657 326
- EP-A- 0 916 552
- EP-A- 1 028 050
- EP-A- 1 084 914
- DE-A- 19 540 819

## Beschreibung

Die Erfindung bezieht sich auf ein Überrollschutzsystem für Kraftfahrzeuge, mit zwei nebeneinander liegenden Fahrzeugsitzen zugeordneten Überrollkörpern, die jeweils in einem Gehäuse, das jeweils auf einem fahrzeugfest verankerten Träger befestigt ist, aus- und einfahrbar geführt gehaltert sind, und mit jeweils einer lösbaren Haltevorrichtung in Verbindung mit einem sensorgesteuerten Aktuator, welche den zugehörigen Überrollkörper im Normalzustand in der eingefahrenen Position hält, und die sensorgesteuert im Crashfall lösbar ist, unter Aufstellen der Überrollkörper in ihre obere, schützende Position.

Derartige Überrollschutzsysteme, wie sie beispielsweise durch die gattungsbildende EP-A-1 028 050 bekannt geworden sind, dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken in die Kassette verhindert.

Die Haltevorrichtung besitzt dabei typischerweise ein am Überrollkörper befestigtes Halteglied, das in lösbarer mechanischer Wirkverbindung mit einem Auslöseglied, typischerweise eine Halteklinke, an einem sensorgesteuerten Auslösesystem steht, das typischerweise durch einen Auslösemagneten, den sogenannten Crashmagneten, oder durch ein pyrotechnisches Auslöseglied gebildet ist. Die Verriegelungseinrichtung besteht typischerweise aus einer schwenkbar angelenkten, federvorgespannten Rastklinke mit Zahnsegmenten und einer feststehenden Zahnleiste oder dergleichen, wobei ein Element mit dem Überrollbügel und das andere fahrzeugfest verbunden ist.

Eine derartige Kassetten-Konstruktion eines Überrollbügelschutzsystems zeigt beispielsweise die DE 43 42 400 A1. Auch die DE 197 81 833 T1 zeigt diese Kassetten-Konstruktion.

Das bekannte Überrollschutzsystem weist ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.

Das System weist ferner zwei mit einem Ende am Gehäuseboden angebrachte, in Innem jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Bei den Überrollschutzsystemen nach dem Stand der Technik ist typischerweise jedem Fahrzeugsitz eine derartige Gehäuse-Kassette zugeordnet, die entweder an den Fahrzeugsitzen angebracht bzw. im Sitzgestell integriert ist oder beispielsweise, wie in der gattungsbildenden EP-A-1 028 050 beschrieben, an der Fahrzeugrückwand oder am Bodenblech hinter den Fahrzeugsitzen befestigt ist. Die einzelnen Überrollschutzsysteme arbeiten dabei unabhängig voneinander, d.h. besitzen jeweils ein Auslösesystem, das jedoch an einen gemeinsamen Überschlags-Sensor angeschlossen ist. Diese Konzeption hat den Nachteil, daß zwei komplette Auslösesysteme vorgesehen sein müssen, was nicht nur den Aufwand erhöht, da beispielsweise die Kosten für den Auslösemagneten bzw. den sogenannten Aktuator nicht unerheblich sind und es gerade bei den Zulieferungen in der Automobilindustrie auf geringe Kosten ankommt, sondern was auch eine exakte Abstimmung des Auslöseverhaltens beider Systeme erforderlich macht, da es auf ein synchrones Auslösen beider Systeme ankommt.

Der Erfindung liegt die Aufgabe zugrunde, das eingangs bezeichnete Überrollschutzsystem hinsichtlich der Haltevorrichtung so auszubilden, daß die Kosten für das Auslösesystem gesenkt werden können und keine aufwendige Abstimmung des Auslöseverhaltens notwendig ist.

Die Lösung dieser Aufgabe gelingt bei einem Überrollschutzsystem für Kraftfahrzeuge, mit zwei nebeneinander liegenden Fahrzeugsitzen zugeordneten Überrollkörpern, die jeweils in einem Gehäuse, das jeweils auf einem fahrzeugfest verankerten Träger befestigt ist, aus- und einfahrbar geführt gehaltert sind, und mit jeweils einer lösbaren Haltevorrichtung in Verbindung mit einem sensorgesteuerten Aktuator, welche den zugehörigen Überrollkörper im Normalzustand in der eingefahrenen Position hält, und die sensorgesteuert im Crashfall lösbar ist, unter Aufstellen der Überrollkörper in ihre obere, schützende Position, gemäß der Erfindung dadurch, daß beide Haltevorrichtungen miteinander mechanisch gekoppelt sind und ein gemeinsamer Aktuator vorgesehen ist, der direkt an diese Kopplung beider Haltevorrichtungen angekoppelt ist.

Das erfindungsgemäße Überrollschutzsystem benötigt daher bezogen auf ein Paar Fahrzeugsitze nur ein Auslösesystem, wobei die direkte mechanische Verkopplung des gemeinsamen Aktuators mit den Haltevorrichtungen für ein synchrones, d.h. zeitgleiches Lösen der Haltevorrichtungen sorgt.

Die DE 195 40 819 A1 zeigt ein Überrollschutzsystem mit einem ein-/ausfahrbaren Überrollbügel, der sich über die gesamte Fahrzeugbreite erstreckt, wobei jedem Bügel-Schenkelrohr eine auslösbare Haltevorrichtung, jedoch nur einem Bügel-Schenkelrohr ein sensorgesteuertes Auslösesystem mit einem Aktuator zugeordnet ist. Beide Haltevorrichtungen sind über eine Entriegelungsstange miteinander gekoppelt, derart, daß nach dem direkten Auslösen der einen Haltevorrichtungdurch den einzigen Aktuator die andere durch den ausfahrenden Überrollbügel indirekt und damit zeitversetzt ausgelöst wird.

Im bekannten Fall liegt daher kein Doppelkassettensystem, bei dem zwei Überrollbügel-Systeme auf einem Träger montiert sind, vor, sondern nur ein einziges System, bei dem, um Verkantungen beim Ausfahren zu vermeiden, jeder Schenkel eine Haltevorrichtung besitzt, was im Fall der Erfindung jedoch nicht gegeben ist. Ferner ist im bekannten Fall nur eine sogenannte indirekte Auslösung offenbart, wogegen im Fall der Erfindung eine direkte Auslösung erfolgt.

Diese direkte Kopplung ermöglicht einen relativ einfachen und dennoch sicheren Aufbau der mechanischen Kopplung zwischen Aktuator und den Haltevorrichtungen, und sie wird unterstützt, wenn zur mechanischen Kopplung beider Haltevorrichtungen ein Verbindungsgestänge vorgesehen ist und an dem Verbindungsgestänge ein Anschlag für die Ankopplung des Aktuators an das Verbindungsgestänge vorgesehen ist.

Da bei dieser direkten Ankopplung im Auslösefall die Haltekräfte an beiden Haltevorrichtungen gleichzeitig gelöst werden müssen, muß von dem Aktuator eine entsprechend hohe Kraft aufgebracht werden. Dies ist gemäß einer anderen Ausgestaltung der Erfindung am günstigsten zu realisieren, wenn der Aktuator durch ein pyrotechnisches Auslöseglied gebildet ist.

Dieses pyrotechnische Auslöseglied kann auf unterschiedlichste Weise mit dem Verbindungsgestänge in Wirkeingriff treten. Gemäß einer Ausgestaltung der Erfindung ist ein wirksamer Wirkeingriff möglich, wenn das pyrotechnische Auslöseglied einen ausstoßbaren Stift für den Wirkeingriff mit dem Anschlag besitzt.

Auch Konstruktionen mit einem stifteinziehenden pyrotechnischen Auslöseglied sind denkbar, bei denen der Stift nicht den Anschlag wegdrückt, sondern zieht. Auch Auslösemagnete mit entsprechend hoher Leistung sind denkbar, jedoch ist die Verwendung eines pyrotechnischen Elementes die wirtschaftlichere Lösung.

Die direkte Kopplung des Aktuators mit den Haltevorrichtungen ist konstruktiv besonders gut zu lösen, wenn die Haltevorrichtungen beider Überrollschutzsysteme jeweils ein mit dem jeweiligen Überrollkörper verbundenes Halteglied und eine damit in lösbarer Wirkverbindung stehende Halteklinke aufweisen, die drehbar am fahrzeugfesten Gehäuse angelenkt ist und einen hakenförmigen Hebelarm für den Wirkeingriff mit dem Halteglied sowie einen Hebelarm für die drehbewegliche Ankopplung des Verbindungsgestänges besitzt. Dieser symmetrische Aufbau vereinfacht die Konstruktion und den Aufwand, was gemäß einer Ausgestaltung noch dadurch unterstützt wird, wenn die Halteglieder und Halteklinken beider Haltevorrichtungen Gleichteile sind.

Anhand von zwei in den Zeichnungen dargestellten Ausführungsbeispielen wird die Erfindung näher erläutert.

Es zeigen:
- Fig. 1: in einer zum Teil geschnittenen Frontalansicht eine erste Ausführungsform des erfindungsgemäßen Halte- und Auslösesystems für zwei nebeneinander auf einem Trägerteil angeordnete Überrollschutzsysteme mit einer direkten Auslösung der Haltevorrichtungen beider Systeme durch einen gemeinsamen Aktuator,
- Fig. 2: in einer Ausschnitt-Darstellung aus Fig. 1 die mechanische Kopplung der Haltevorrichtungen beider Systeme über ein Verbindungsgestänge, an dem der Aktuator direkt angreift,
- Fig. 3: eine Queransicht des mechanischen Koppelsystems nach Fig. 2,
- Fig. 4: zum Zwecke des Vergleichs in einer zum Teil geschnittenen Frontalansicht eine Ausführungsform des Halte- und Auslösesystems für zwei nebeneinander auf einem Trägerteil angeordnete Überrollschutzsysteme mit einer indirekten Auslösung durch den gemeinsamen Aktuator, der nur der Haltevorrichtung eines Überrollschutzsystems zugeordnet ist, mit einer zwangsbetätigten Kopplung zwischen diesem Überrollschutzsystem und der Haltevorrichtung des anderen Überrollschutzsystems,
- Fig. 5: in einer isometrischen Darstellung einen Ausschnitt aus Fig. 4 die mechanische Verkopplung für die zwangsgesteuerte Auslösung des nicht direkt vom Aktuator betätigten Überrollschutzsystem,
- Fig. 6: das System nach Fig. 5, jedoch in einer schematisierten Frontal-Darstellung analog Fig. 2, und
- Fig. 7 - 10: eine zweite Ausführungsform der zentralen direkten Auslösung mit einer mechanischen Verkopplung nach dem Scherenprinzip.

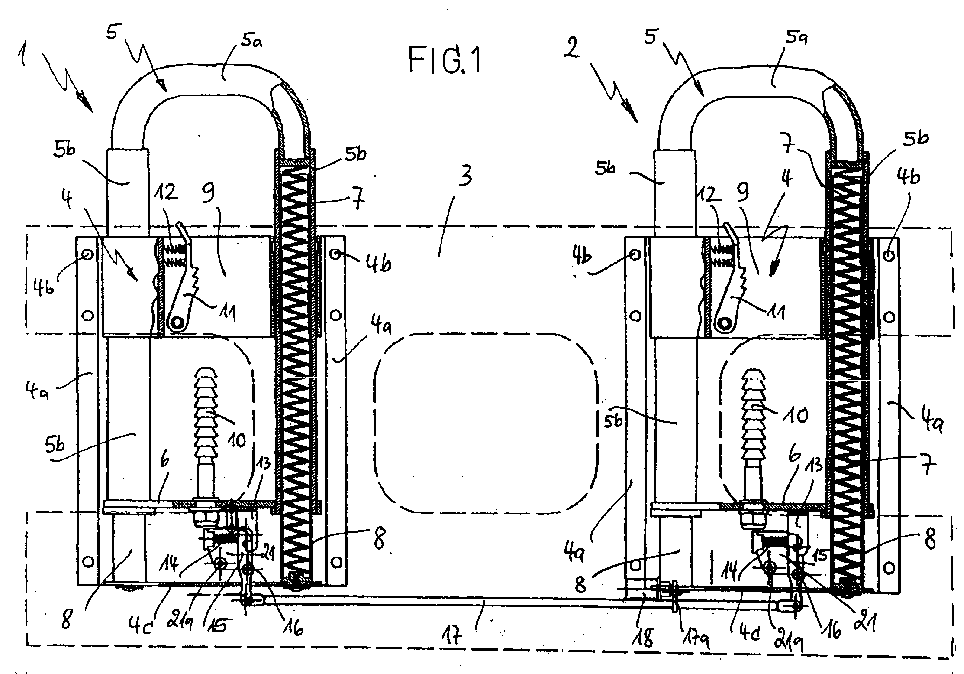

Die Figuren 1 - 3 zeigen eine erste Ausführungsform des erfindungsgemäßen Halte- und Auslösesystems, die im folgenden als direkte Auslösung bezeichnet wird.

In Fig. 1 sind in einer zum Teil geschnittenen Frontalansicht zwei Überrollschutzsysteme 1 und 2, die jeweils einem Fahrzeugsitz zugeordnet sind, dargestellt, die vorzugsweise einen identischen Aufbau besitzen. Der Aufbau entspricht vorzugsweise der eingangs beschriebenen Kassetten-Konstruktion entsprechend der dort zitierten DE 43 42 400 A1. Beide Überrollschutzsysteme 1, 2 sind auf einem Trägerteil 3 angebracht. Das Trägerteil kann beispielsweise die Rückwand eines zweisitzigen Fahrzeuges sein. Die Überrollschutzsysteme können entweder auf dem Trägerteil montiert oder in dieses Trägerteil integriert sein. Auch andere fahrzeugfeste Befestigungen der beiden Überrollschutzsysteme auf einem Trägerteil sind denkbar. Wesentlich dabei ist die starre, mechanische Verbindung beider Systeme.

Jedes Überrollschutzsystem 1, 2 weist ein Gehäuse in Form einer einseitig offenen, U-förmigen Kassette 4, auf, mit zwei Seitenwänden, die jeweils einen nach außen abgekanteten Winkelabschnitt 4 a zur Befestigung der Kassette auf dem Trägerteil 3 besitzen. In Fig. 1 sind dabei entsprechende Befestigungslöcher 4 b angedeutet. Die Kassette 4 weist ferner ein Bodenteil 4 c auf, das, wie später noch erläutert werden wird, die Basis für die fahrzeugfeste Befestigung des Auslösesystems bildet.

Das Überrollschutzsystem besitzt weiterhin einen U-förmigen Überrollbügel 5, bestehend aus einem gekrümmten Abschnitt 5 a und zwei Schenkelrohren 5 b, deren offene Enden über ein Verbindungselement 6 traversenartig miteinander verbunden sind.

Das System weist ferner zwei mit einem Ende am Gehäuseboden 6 angebrachte, im Innern jeweils eine Druckfeder 7 für den alleinigen Antrieb des Überrollbügels 5 aufnehmende Standrohre 8 auf, die jeweils von einem Schenkelrohr 5 b führend umgriffen sind.

Das System besitzt zudem einen Führungsblock 9, der am oberen Ende des Gehäuses 4 an den Seitenwändern der Kassette befestigt ist und der Führungsöffnungen zur zusätzlichen äußeren Führung der Schenkelrohre 5 b besitzt.

Zur Verriegelung des Überrollbügels 5 in der ausgefahrenen Position ist einmal ein Rastdorn 10, der an der Traverse 6 befestigt, im Beispiel angeschraubt ist, und umlaufende Hinterschneidungen aufweist, und zum anderen eine gezahnte Verriegelungsklinke 11 vorgesehen, die mittels Federn 12 vorgespannt im Führungsblock 9 schwenkbar angelenkt ist.

Die vorstehend beschriebene, an sich bekannte Konstruktion ist nur als vorteilhaftes Ausführungsbeispiel zu sehen. Die Erfindung kann auch bei anderen Systemen, z.B. dem nach der älteren deutschen Patentnameldung 100 40 649.1 angewendet werden.

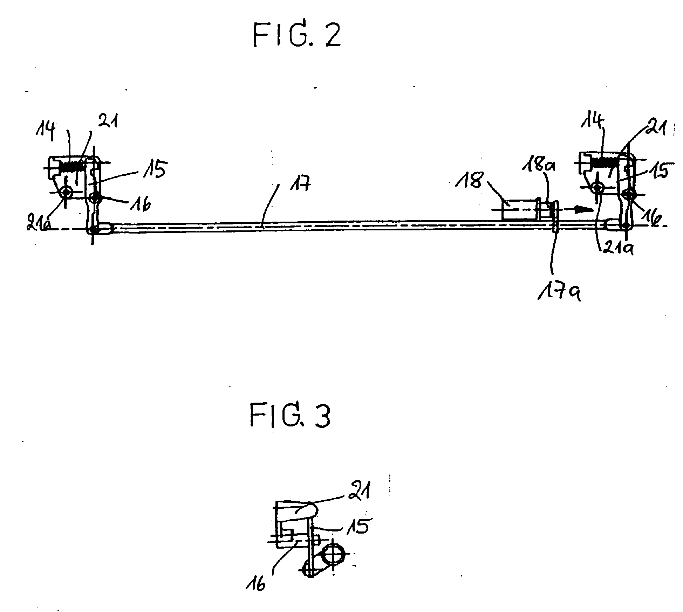

An der Traverse 6 ist jeweils ein Halteglied in Form einer Klinknase 13 fest angebracht, die in Fig. 1, die den eingefahrenen Zustand des Überrollbügels zeigt, jeweils im verklinkten Wirkeingriff mit einer mittels einer Feder 14 vorgespannten Halteklinke 15 steht, die drehbar um die Achse 16 im unteren Teil des Gehäuses 4 angelenkt ist. Am unteren Hebelarm der Halteklinke 15 ist, wie insbesondere auch die Einzelteilzeichnungen nach den Fig. 2 und 3 zeigen, jeweils ein Ende einer Verbindungsstange 17 drehbeweglich angelenkt. An dieser Verbindungsstange 17 ist ein Anschlag 17 a ausgebildet, der den Wirkangriffspunkt für einen Aktuator 18 bildet, der sensorgesteuert im Fall eines Überschlages aktiviert wird und über einen ausstoßbaren Stift 18 a die Verbindungsstange 17 nach rechts verschiebt und dabei die Halteklinken 15 gegen den Uhrzeigersinn verschwenkt, unter Freigabe der Haltenasen 13 an der Traverse 6. Aufgrund der vorgespannten Druckfedern 7 werden dadurch die Überrollbügel 5 nach oben im msec-Bereich ausgefahren, wobei dann die gezahnte Sperrklinke 11 in Wirkeingriff mit dem Rastdorn 10 tritt und diese Position verriegelt.

Bei dem in den Figuren 1 - 3 dargestellten direkten System sind, wie zu erkennen, gleiche Hebelarme für die Klinken 15 beider Systeme vorgesehen, d.h. die Klinken sind Gleichteile. Der Aktuator 18 wirkt unmittelbar, d.h. direkt auf die Verbindungsstange 17 und gibt beide Überrollbügel zeitgleich frei. Für dieses direkte System ist allerdings ein Aktuator 18 mit relativ hoher Energie notwendig, um beide Klinken 15 gegen die durch die Vorspannung der Druckfedern 7 an den Rastnasen 13 wirkende Haltekraft sicher zu verschwenken. Daher ist der Aktuator 18 vorzugsweise ein pyrotechnisches Auslöseelement, wie es z.B. durch die DE 43 42 401 A1 bekannt geworden ist.

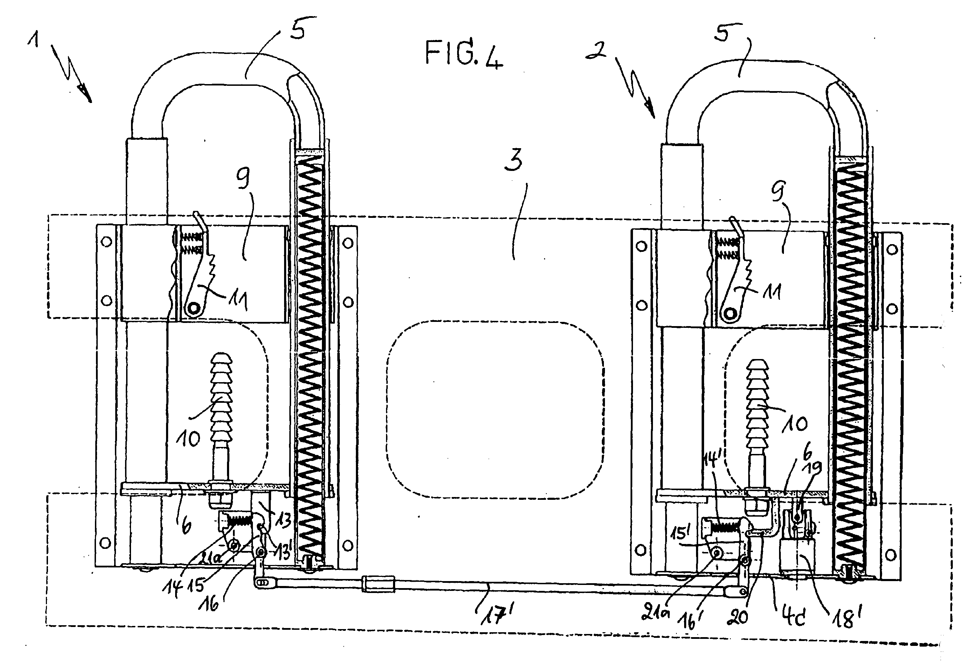

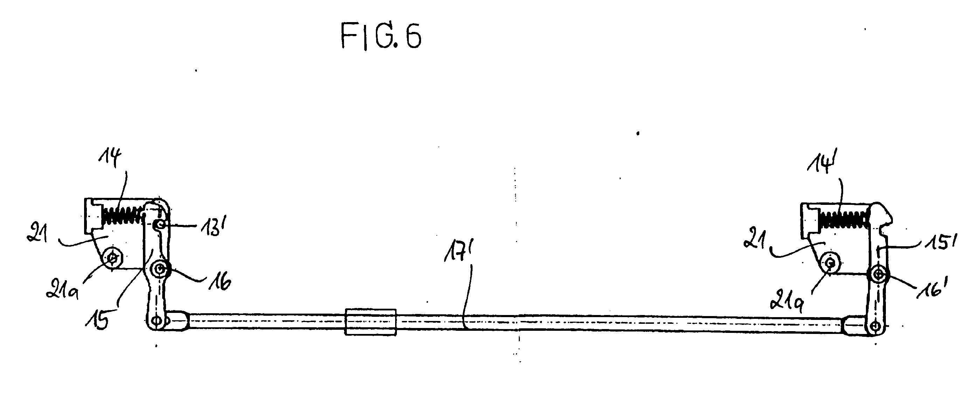

In den Figuren 4 - 6 ist zu Vergleichszwecken eine Ausführungsform des Halte- und Auslösesystems, die als indirekte Auslösung bezeichnet wird, dargestellt. Der Einfachheit halber sind die beiden Überrollschutzsysteme 1 und 2 identisch zu denen in Fig. 1, mit Ausnahme des Halte- und Auslösesystems, dargestellt. Daher sind bei den beiden Systemen nur die wesentlichen Komponenten mit den Bezugszeichen nach Fig. 1 versehen, wogegen das indirekte Halte- und Auslösesystem ausführlich beschrieben wird.

Während bei dem Überrollschutzsystem 1 die Haltevorrichtung entsprechend Fig. 1 eine Rastnase 13, die einen Haltebolzen 13' besitzt und die mittels der Feder 14 vorgespannte, um den Punkt 16 drehbeweglich angelenkte hakenförmige Halteklinke 15, die im Wirkeingriff mit dem Rastbolzen 13' steht, aufweist, ist bei dem Überrollschutzsystem 2 ein elektrisch betätigbarer Aktuator, der sogenannte Chrashmagnet 18' vorgesehen, der vorzugsweise entsprechend der DE 197 50 693 A1 eine Doppelhebel-Halteklinke besitzt, die in lösbarer Wirkverbindung mit einer einen Haltebolzen aufweisenden Haltegabel 19, die an der Traverse 6 befestigt ist, steht.

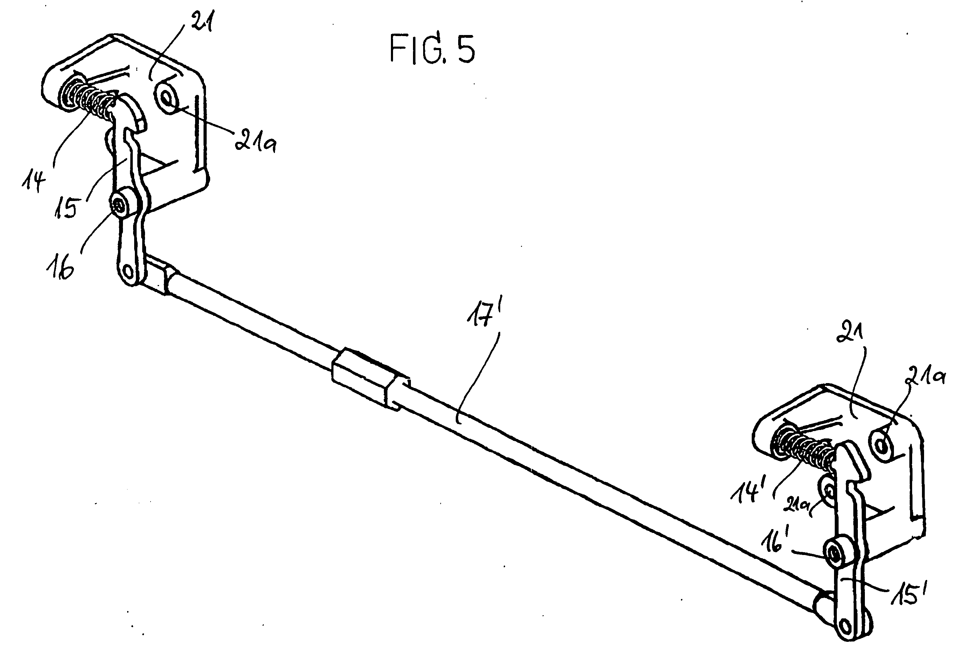

An der Traverse 6 ist ferner eine Steuernocke 20 angebracht, die in Wirkverbindung mit einer Zwischen-Klinke 15' steht, die schwenkbar um die Achse 16' im Gehäuse angelenkt ist und mittels der vorgespannten Feder 14' im haltenden Zustand, der in Fig. 4 dargestellt ist, gegen die Steuernocke 20 gedrückt wird. Die Klinken 15 und 15' sind dabei über eine Verbindungsstange 17' starr miteinander gekoppelt. Angelenkt sind die beiden Klinken 15, 15', ebenso wie die Klinken 15 in Fig. 1, an einem Bauteil 21 entsprechend Fig. 5, das seinerseits im Gehäuse 4 befestigt ist. Die Figuren zeigen hierzu entsprechende Befestigungslöcher 21 a.

Das indirekte Halte- und Auslösesystem nach den Figuren 4 - 6 arbeitet wie folgt:

Bei einer Auslösung des elektrischen Aktuators 18' gibt das zugehörige Doppelhebel-Klinkensystem die Haltegabel 19 und damit die Traverse 6, die mit dem Überrollbügel 5 verbunden ist, frei, so daß der Überrollbügel 5 des Überrollschutzsystems 2 ausfährt. Unmittelbar nach Beginn der Ausfahrbewegung betätigt die Steuernocke 20 die Zwischenklinke 15' in dem Sinne, daß sie gegen den Uhrzeigersinn verschwenkt wird, wodurch das Verbindungsgestänge 17' nach rechts bewegt und damit auch die Halteklinke 15 des Überrollschutzsystems 1 entgegen dem Uhrzeigersinn verschwenkt wird, unter Freigabe des Haltebolzens 13', so daß auch der Überrollbügel 5 des Überrollschutzsystems 1 ausfährt.

Während somit bei dem direkten System nach den Figuren 1 - 3 der Aktuator über die Verbindungsstange 17 direkt beide Halteklinken 15 betätigt, löst bei dem indirekten System nach den Figuren 4 - 6 der Aktuator direkt nur die Haltevorrichtung des einen Überrollschutzsystems aus, wogegen die Haltevorrichtung des anderen Überrollschutzsystems indirekt über das Gestänge aktiviert durch die Ausfahrbewegung des direkt ausgelösten Überrollbügels, zeitversetzt im Millisekunden-Bereich ausgelöst wird.

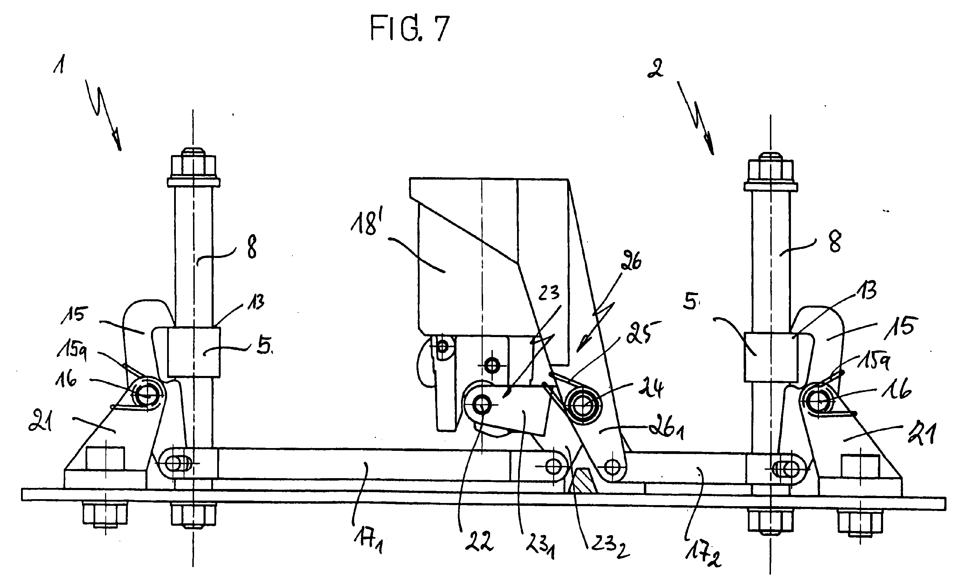

In den Figuren 7 - 10 ist eine weitere Ausführungsform der Erfindung dargestellt, bei der die beiden Haltevorrichtungen nach dem Scherenprinzip mittels eines Auslösesystems zentral entriegelt werden.

Teile, die mit denen nach den Figuren 1 - 6 wirkungsgleich sind, sind mit derselben Bezugsziffer versehen. Der einfacheren Darstellung wegen sind die beiden Kassettensysteme 1, 2 nur vereinfacht schematisch dargestellt, da es auf die zentrale Verriegelung ankommt.

Die Fig. 7 zeigt den Zustand, in dem beide Systeme 1, 2 im Ruhezustand sind. Beide Halteklinken 15, die durch Federn 15 a vorgespannt sind, sind im Wirkeingriff mit dem jeweiligen Überrollbügel 5.

Im Wirkeingriff mit dem Aktuator 18', ein Crash-Magnet, steht ein Haltebolzen 22, der in einem Schenkel 23₁ eines V-förmigen Doppel-Hebels 23 gehaltert ist, in dessen anderen Schenkel 23₂ ein Verbindungsgestänge 17₁ angelenkt ist, das am anderen Ende an der linken Klinke 15 angelenkt ist. Der V-förmige Doppelhebel 23 ist dabei um den Drehpunkt 24 fahrzeugfest angelenkt. Es ist ferner ein zweiter Hebel 26 vorgesehen, der ebenfalls um den Drehpunkt 24 drehbar fahrzeugfest angelenkt ist. Am unteren Hebelarm 26₁ ist dabei eine zweite Verbindungsstange 17₂ drehbar angelenkt, die am anderen Ende an der rechten Klinke 15 angelenkt ist. Die Hebel 23, 26 sind über eine Feder 25 gegenseitig vorgespannt.

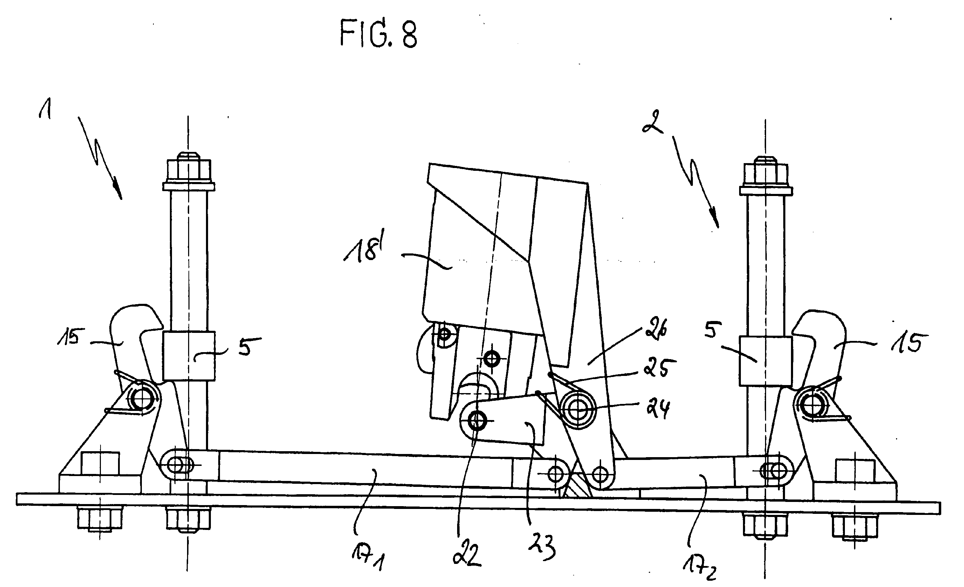

Wenn der Crah-Magnet 18' ausgelöst wird, sei es sensorgesteuert bei einem drohenden Überschlag oder handbetätigt zu Testzwecken, gibt er den Haltebolzen 22 frei. Die Feder 25 dreht dann die Hebel 23 und 26 um die Drehlagerung 24, wodurch die Verbindungsstange 17₁ nach rechts und die Verbindungsstange 17₂ nach links bewegt wird. Dadurch öffnen beide Klinken 15 und der zugehörige Überrollbügel 5 fährt aus. Dieser Zustand ist in Fig. 8 dargestellt.

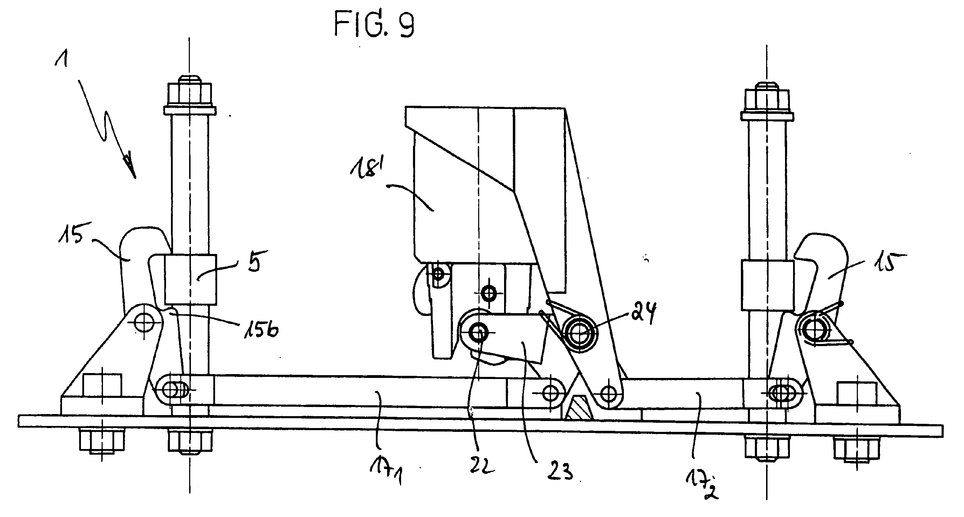

Beim Reversieren des Systems 1 (Fig. 9) wird der Überrollbügel 5 nach unten gedrückt, wobei die Klinke 15 einrastet. Der Überrollbügel fährt dann weiter und drückt auf eine Klinkennase 15 b unter Verschwenkung der Klinke 15. Dadurch wird mittels der Stange 17₁ der Hebel 23 um die Drehlagerung 24 im Uhrzeugersinn verschwenkt, bis der Haltebolzen 22 in Wirkeingriff mit dem Hebel-Auslösesystem des Aktuators 18' gelangt. Das System 1 ist dadurch wieder in der Ruheposition.

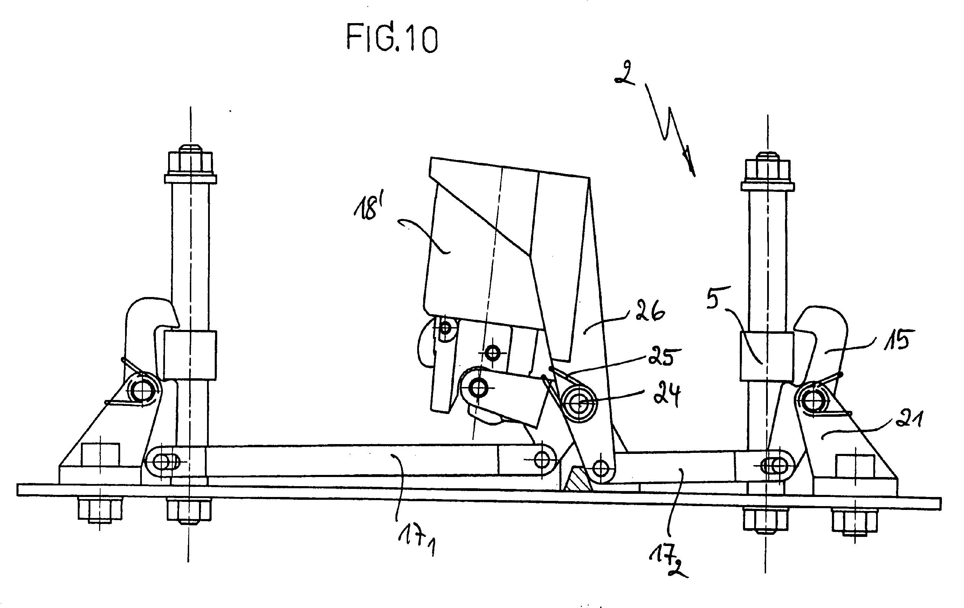

Beim Reversieren des Systems 2 (Fig. 10) fährt der zugehörige Überrollbügel 5 nach unten; die Klinke 15 verdreht sich ohne den Aktuator 18' zu öffnen und rastet ein. Die Verbindungsstange 17₂ wird dabei unter Verschwenken des Hebels 26 nach rechts in die Ausgangslage gezogen. Danach befindet sich auch das System 2 wieder im Ausgangszustand.

## Patentansprüche

1. Überrollschutzsystem für Kraftfahrzeuge, mit zwei nebeneinander liegenden Fahrzeugsitzen zugeordneten Überrollkörpern (5), die jeweils in einem Gehäuse (4), das jeweils auf einem fahrzeugfest verankerten Träger (3) befestigt ist, aus- und einfahrbar geführt gehaltert sind, und mit jeweils einer lösbaren Haltevorrichtung(13, 15) in Verbindung mit einem sensorgesteuerten Aktuator (18, 18'), welche den zugehörigen Überrollkörper (5) im Normalzustand in der eingefahrenen Position hält, und die sensorgesteuert im Crashfall lösbar ist, unter Aufstellen der Überrollkörper (5) in ihre obere, schützende Position, **dadurch gekennzeichnet, daß** beide Haltevorrichtungen (13, 15) miteinander mechanisch gekoppelt sind und ein gemeinsamer Aktuator (18) vorgesehen ist, der direkt an diese Kopplung beider Haltevorrichtungen angekoppelt ist.

2. Überrollschutzsystem nach Anspruch 1, **dadurch gekennzeichnet, daß** zur mechanischen Kopplung beider Haltevorrichtungen (13, 15) ein Verbindungsgestänge (17) vorgesehen ist.

3. Übenrollschutzsystem nach Anspruch 2, **dadurch gekennzeichnet, daß** an dem Verbindungsgestänge (17) ein Anschlag (17 a) für die Ankopplung des Aktuators (18) an das Verbindungsgestänge (17) vorgesehen ist.

4. Überrollschutzsystem nach Anspruch 3, **dadurch gekennzeichnet, daß** der Aktuator (18) durch ein pyrotechnisches Auslöseglied gebildet ist.

5. Überrollschutzsystem nach Anspruch 4, **dadurch gekennzeichnet, daß** das pyrotechnische Auslöseglied einen ausstoßbaren Stift (18) für den Wirkeingriff mit dem Anschlag (17 a) besitzt.

6. Überrollschutzsystem nach Anspruch 1, **dadurch gekennzeichnet, daß** zur mechanischen Kopplung beider Haltevorrichtungen zwei Verbindungsstangen (17₁, 17₂) vorgesehen sind, die am freien Ende nach dem Scherenprinzip mit dem gemeinsamen Aktuator (18') mechanisch gekoppelt sind.

7. Überrollschutzsystem nach einem der Ansprüche 2 bis 6, **dadurch gekennzeichnet, daß** die Haltevorrichtungen (13, 15) beider Überrollschutzsysteme (1, 2) jeweils ein mit dem jeweiligen Überrollkörper (5) verbundenes Halteglied (13) und eine damit in lösbare Wirkverbindung stehende Halteklinke (15) aufweisen, die drehbar am fahrzeugfesten Gehäuse (4) angelenkt ist und einen hakenförmigen Hebelarm für den Wirkeingriff mit dem Halteglied (13) sowie einen Hebelarm für die drehbewegliche Ankopplung des Verbindungsgestänges (17) besitzt.

8. Überrollschutzsystem nach Anspruch 7, **dadurch gekennzeichnet, daß** die Halteglieder (13) und Halteklinken (15) beider Haltevorrichtungen Gleichteile sind.

## Claims

1. A rollover protection system for motor vehicles, having rollover members (5) which are associated with two vehicle seats situated side by side and which are each extendibly and retractably guided and mounted in a housing (4), which is in each case fixed on a support (3) anchored to the vehicle, and each having a releasable holding device (13, 15) connected to a sensor-controlled actuator (18, 18'), which in the normal state holds the associated rollover member (5) in the retracted position, and which, controlled by the sensor, is releasable in the event of a crash, deploying the rollover member (5) into its upper, protective position, **characterized in that** the two holding devices (13, 15) are mechanically coupled to one another and a common actuator (18) is provided, which is coupled directly to this coupling of the two holding devices.

2. The rollover protection system according to Claim 1, **characterized in that** a connecting linkage (17) is provided for the mechanical coupling of the two holding devices (13, 15).

3. The rollover protection system according to Claim 2, **characterized in that** a stop (17a) for coupling the actuator (18) to the connecting linkage (17) is provided on the connecting linkage (17).

4. The rollover protection system according to Claim 3, **characterized in that** the actuator (18) takes the form of a pyrotechnic triggering member.

5. The rollover protection system according to Claim 4, **characterized in that** the pyrotechnic triggering member has an ejectable pin (18) for active engagement with the stop (17a).

6. The rollover protection system according to Claim 1, **characterized in that** two connecting rods (17₁, 17₂), which at the free end are mechanically coupled to the common actuator (18') on the scissors principle, are provided for the mechanical coupling of the two holding devices.

7. The rollover protection system according to any one of Claims 2 to 6, **characterized in that** the holding devices (13, 15) of the two rollover protection systems (1, 2) each have a holding member (13) connected to the respective rollover member (5), and a holding pawl (15), which is operatively and releasably connected thereto and is linked in a pivotable manner to the housing (4) fixed to the vehicle, and which has a hooked lever arm for operative engagement with the holding member (13) and a lever arm for the rotatable coupling of the connecting linkage (17).

8. The rollover protection system according to Claim 7, **characterized in that** the holding members (13) and holding pawls (15) of both holding devices are identical parts.

## Revendications

1. Système de protection anticapotage pour véhicules automobiles, avec deux arceaux de sécurité (5) disposés l'un à côté de l'autre et affectés à des sièges du véhicule, lesquels arceaux sont chacun guidés, déployables et rétractables, dans un boîtier (4) qui est fixé sur un support (3) ancré de manière fixe sur le véhicule, et avec chaque fois un dispositif de retenue (13, 15) amovible en combinaison avec un actionneur (18, 18') commandé par capteur, dispositif qui tient l'arceau de sécurité (5) correspondant à l'état normal en position rétractée, et qui est amovible, commandé par capteur, en cas de collision, avec déploiement des arceaux de sécurité (5) dans leurs positions supérieures protectrices, **caractérisé en ce que** les deux dispositifs de retenue (13, 15) sont couplés mécaniquement l'un avec l'autre et qu'un actionneur (18) commun couplé directement à ce couplage des deux dispositifs de retenue est prévu.

2. Système de protection anticapotage selon la revendication 1, **caractérisé en ce que**, pour le couplage mécanique des deux dispositifs de retenue (13, 15), une tringlerie de raccordement (17) est prévue.

3. Système de protection anticapotage selon la revendication 2, **caractérisé en ce qu'**une butée (17a) est prévue sur la tringlerie de raccordement (17) pour le couplage de l'actionneur (18) à la tringlerie de raccordement (17).

4. Système de protection anticapotage selon la revendication 3, **caractérisé en ce que** l'actionneur (18) est formé par un élément de déclenchement pyrotechnique.

5. Système de protection anticapotage selon la revendication 4, **caractérisé en ce que** l'élément de déclenchement pyrotechnique comporte une goupille (18) éjectable pour la prise effective avec la butée (17a).

6. Système de protection anticapotage selon la revendication 1, **caractérisé en ce que**, pour le couplage mécanique des deux dispositifs de retenue, deux tiges de raccordement (17₁, 17₂) qui sont mécaniquement couplées à leur extrémité libre selon le principe des ciseaux avec l'actionneur (18') commun sont prévues.

7. Système de protection anticapotage selon l'une quelconque des revendications 2 à 6, **caractérisé en ce que** les dispositifs de retenue (13, 15) des deux systèmes de protection anticapotage (1, 2) présentent chacun un élément de retenue (13) relié à l'arceau de sécurité (5) correspondant et un loquet de maintien (15) en raccord effectif détachable avec ce dernier, loquet qui est articulé de manière rotative sur le boîtier (4) fixe sur le véhicule et comporte un bras de levier en forme de crochet pour la prise effective avec l'élément de retenue (13) ainsi qu'un bras de levier pour le couplage mobile en rotation de la tringlerie de raccordement (17).

8. Système de protection anticapotage selon la revendication 7, **caractérisé en ce que** les éléments de retenue (13) et loquets de maintien (15) des deux dispositifs de retenue sont des pièces identiques.
